# EUROPÄISCHE PATENTSCHRIFT

(11) **EP 2 631 192 B1**
(45) Veröffentlichungstag und Bekanntmachung des Hinweises auf die Patenterteilung: **31.08.2016**
(21) Anmeldenummer: 13000866.7
(22) Anmeldetag: 21.02.2013
(51) Int. Cl.: B65D 25/28, B65D 25/32, A47J 45/06

(54) **Tragevorrichtung für ein Fässchen**
Carrier device for a keg
Dispositif pour porter un baril

(30) Priorität: 23.02.2012 DE 102012003693
(43) Veröffentlichungstag der Anmeldung: 28.08.2013
(73) Patentinhaber: Fass-Frisch GmbH, 75031 Eppingen (DE)
(72) Erfinder: Grittmann, Dennis, 75031 Eppingen (DE); Diefenbacher, Michael, 75056 Sulzfeld (DE)
(74) Vertreter: Straub, Bernd

(56) Entgegenhaltungen:
- DE-U1-202009 014 034
- US-A1- 2008 173 655

## Beschreibung

Die nachfolgende Erfindung bezieht sich auf eine Kombination aus einem Fässchen und einer Tragevorrichtung, die an der Oberseite des Fässchens befestigbar oder befestigt ist, nach dem Oberbegriff des Anspruchs 1.

Aus dem Stand der Technik sind bereits verschiedene Vorrichtungen bekannt, die es dem Verbraucher bequem machen, Behältnisse wie kleine Fässer, respektive "Fässchen", zu tragen. Einfache Tragevorrichtungen umfassen dazu etwa ein Griffelement, das beidenends gelenkig mit einer Klammervorrichtung verbunden ist, die auf den Fassrand aufgesetzt werden kann. Durch die Gelenke kann der Griff in Bezug zu einer Schwenkachse, die in der Deckelebene des Behälters liegt, verschwenkt werden und so kann das Behältnis, etwa ein Bierfässchen, mitsamt der Griffanordnung platzsparend in einen Kühlschrank gestellt werden. Eine weitere Tragevorrichtung ist aus der DE 10 2008 057 632 A1 bekannt, die eine Tragevorrichtung für einen Behälter angibt, insbesondere für ein Partyfass. Diese Tragevorrichtung weist einen ringförmigen Aufsatz auf, der mindestens ein Verbindungselement zur Verbindung mit einem oberen Rand des Behälters hat und mit einem Tragegriff ausgestattet ist, der sich quer über den ringförmigen Aufsatz erstreckt und der in einer eingezogenen Stellung versenkt innerhalb einer Außenkontur des ringförmigen Aufsatzes aufgenommen ist. Dieser Griff ist in eine Gebrauchsstellung bewegbar in der er über die Außenkontur des ringförmigen Aufsatzes nach oben hervorsteht und mit einer Hand umgriffen werden kann. So soll ein einfacher und platzsparender Aufbau gewährleistet und eine platzsparende Konstruktion geschaffen werden.

DE 20 2009 014 034 U1 offenbart die Merkmale des Oberbegriffs des Anspruchs 1 in Gestalt einer Tragevorrichtung zum Transport eines Behälters. Diese hat dazu einen stirnseitig abstehenden Rand, der aus einem Befestigungselement mit daran angelenktem Griffelement besteht. Die mit dieser Tragevorrichtung versehenen Behälter weisen einen unteren Rand auf, dessen Durchmesser kleiner ist als der des oberen Rands, so dass Stapelbarkeit der Behälter mit Tragegriff nicht ohne weiteres ermöglicht wird.

Auch die US 2008/0173655A1 offenbart einen lösbaren Plastik-Tragegriff für Fässchen bzw. Dosen, deren Durchmesser an der Oberseite gleich dem an der Unterseite ist, und der an der Oberseite des Fässchens bzw. am Innenumfang der Oberseite des Fässchens angeordnet wird. Der Kunststoffhandgriff verwindet sich beim Verschwenken aus der Ringebene, was mit einer gewissen plastischen Verformung verbunden ist, was zur Folge hat, dass der Handgriff nach Gebrauch nicht mehr vollständig in die Ringebene zurückverschwenkt werden kann und was insofern ebenfalls die Stapelbarkeit beeinflusst.

Ausgehend von diesem Stand der Technik liegt der vorliegenden Erfindung die Aufgabe zu Grunde, eine Kombination aus Fässchen plus Tragevorrichtung zu schaffen, bei der die Tragevorrichtung mit möglichst wenig Material kostengünstig geschaffen werden kann, dabei im Vergleich zu Tragegriffen mit nur zwei Befestigungsenden auf verbesserte, sicherere Weise angebracht werden kann und die dabei zugleich eine optimale Stapelbarkeit der Fässchen erlaubt. Zudem soll eine gute Wiederverwendbarkeit der Tragevorrichtung gegeben sein.

Diese Aufgabe wird durch eine Kombination aus Tragevorrichtung und Fässchen mit den Merkmalen des unabhängigen Anspruchs 1 gelöst.

Weiterbildungen der Gegenstände werden durch die jeweiligen Unteransprüche beschrieben.

In der erfindungsgemäßen Kombination aus einem Fässchen und einer Tragevorrichtung, die zum Befestigen an der Oberseite eines Fässchens vorgesehen ist, damit dieses bequem mit einer Hand getragen werden kann, weist das Fässchen an seiner Oberseite einen ringförmigen Bördelrand auf, dessen äußerer Durchmesser kleiner ist als der innere Durchmesser des Bördelrands an der Fässchen-Unterseite. Die Tragevorrichtung weist eine ringförmige Basis auf. An einander gegenüberliegenden Seiten der ringförmigen Basis ist ein Tragegriff gelenkig befestigt. Ferner sind an der ringförmigen Basis Befestigungsmittel zum Befestigen der Tragevorrichtung der Fässchenoberseite vorgesehen.

Als Befestigungsmittel, um die Tragevorrichtung an der Fässchen-Oberseite zu befestigen, werden hierin Klammern vorgeschlagen, die an einem Außenumfang des Einleger-Rings angeordnet sind und die jeweils eine Klammeröffnung aufweisen, die sich zu einer von der Griffseite der Tragevorrichtung weg weisenden Seite öffnet und die innenseitig Eingriffsmittel aufweisen, die geeignet sind, mit dem Bördelrand der Oberseite eines Fässchens in haltenden Eingriff gebracht zu werden. Diese Klammern ermöglichen es, dass durch einfaches Aufschieben von oben die Tragevorrichtung an dem Fässchen befestigt werden kann, indem die Klammeröffnungen dann über den Bördelrand gleiten; denn die ringförmige Basis ist als ein Einleger-Ring ausgestaltet. Dazu ist ihr Umfang zum Einlegen des Einleger-Rings in den Bördelrand an der Oberseite des Fässchens ausgebildet. Das heißt, der Außenumfang des Einleger-Rings ist gerade so groß, dass er mit etwas Spiel oder ohne Spiel in den ringförmigen Rand, der wie ein Steg an der Fässchenoberseite übersteht, eingelegt werden kann. Dieser Fässchenrand wird üblicherweise durch Bördeln gebildet, kann aber auch durchaus durch andere Fertigungstechniken für solche Gefäße hergestellt werden. Die gelenkige Befestigung des Tragegriffs wird durch zwei Befestigungsabschnitte gebildet, die an den gegenüberliegenden Seiten des Einleger-Rings innenumfänglich vorliegen und die jeweils ein Scharnier aufweisen, das mit je einem Ende des Tragegriffs verbunden ist. Dabei sind die Scharniere so angeordnet, dass der Tragegriff in Bezug zu einer in der Ebene des Einleger-Rings liegenden Schwenkachse schwenkbar ist. So kann in einer Nichtgebrauchsanordnung der Tragegriff vollständig in der Einleger-Ring-Ebene aufgenommen werden.

Unter "Fässchen" werden vorliegend insbesondere kleine Fässer mit einem Fassungsvermögen von unter 10 Litern verstanden. "Partyfässchen" meint hierin sogar spezielle kleine Fässer, die ein Fassungsvolumen von bis zu einschl. 5 Litern haben; zwei bekannte und vielfach gerade für Bier gerne eingesetzte Gebindegrößen fassen 3,1 L bzw. 5 Liter Bier.

Derartige Fässchen können ohne Weiteres bereits verkaufsseitig mit den Tragegriffen ausgestattet sein, da die Griffe eine bequeme und sichere Stapelbarkeit der Fässchen zulassen.

Die Klammern könnten als Federelemente ausgebildet sein. Ohne dass dies ausgeschlossen wird, wird dennoch vorliegend vorgeschlagen, dass als innenseitig vorliegende Eingriffsmittel an jeder Klammer eine oder mehrere Rastnasen vorliegen. Derartige Rastnasen untergreifen den Bördelrand sicher und zuverlässig.

Um die Tragevorrichtung stabil auszugestalten und ein Verwinden in der Einleger-Ring-Ebene im Gebrauch zu verhindern, wird vorgeschlagen, vorteilhaft insgesamt zumindest drei, besser vier oder mehr Klammern an der Tragevorrichtung vorzusehen. Dabei sollten vorteilhaft wenigstens zwei der drei oder mehr Klammern, an dem Einleger-Ring an der Position vorliegen, die der Position der Befestigungsabschnitte entspricht, da dort die Kraftübertragung der Zugkraft beim Tragen auf den Einleger-Ring eingeleitet wird.

Gerade diese Klammern können aus Stabilitätsgründen auch eine größere Breite aufweisen als die weiteren Klammern.

Um die gewünschte und angestrebte Stapelbarkeit von Fässchen, die mit dieser Tragevorrichtung ausgestattet sind, auf sichere Weise zu ermöglichen, hat die Tragevorrichtung in ihrer Nichtgebrauchsanordnung eine Gesamthöhe, die zumindest bis zur halben Höhe der Tragevorrichtung und mit ihrem gesamten Umfang innerhalb eines Umfangs eines Bördelrandes an einer Unterseite eines weiteren Fässchens aufnehmbar ist. Der Umfang der Tragevorrichtung bestimmt sich durch die breitesten Stellen, die ja durch die außenseitig an dem Einleger-Ring vorliegenden Klammern erzeugt werden. Insofern ist der hier gemeinte Umfang der, den ein um die Klammern der Tragevorrichtung gedachter Kreis oder Ring hat.

Da die Tragevorrichtung auf hinsichtlich ihrer Dimensionen bestimmte zu stapelnde Fässchen abgestimmt gefertigt wird, kann die Höhe der Tragevorrichtung leicht den Bördelrändern der Fässchenunterseiten angeglichen werden. Da derartige Fässchen ohnehin bekanntermaßen gestapelt werden, ist der Fassdurchmesser an der Fassoberseite kleiner als an der Unterseite; so kann - ohne und mit Tragevorrichtung - der untere Bördelrand des oberen Fasses den oberen Bördelrand des unteren Fasses haltend überkragen. Dieses Prinzip wird durch die erfindungsgemäß ausgebildeten Tragevorrichtungen nicht unterbrochen, die an der Grenzfläche zwischen zwei Fässern ohne zu stören integriert werden.

Das Scharnier, durch das der Griff sich erfindungsgemäß von einer Nichtgebrauchsposition, quasi liegend, in eine Gebrauchsposition, also hochstehend, schwenken lässt, kann ein einfaches Filmscharnier sein. Dies ist besonders günstig fertigbar - wie die Tragevorrichtung an sich, wenn diese Tragevorrichtung teilweise oder vollständig aus Kunststoff hergestellt wird. In Frage kommt dabei ein thermoplastischer Kunststoff, der insbesondere zum Spritzgießen geeignet ist. Thermoplastische Kunststoffe können etwa Polyethylen, Polypropylen, Polyester, Polyethylenterephthalat, Polystyrol oder HD-Polyethylen sein.

Die Tragevorrichtung kann einstückig gefertigt sein, was sich ebenfalls leicht durch Spritzgießen realisieren lässt.

Der Tragegriff muss dabei nicht massiv ausgeführt sein - kann es aber -, sondern kann durchaus materialsparend aus einem Rahmen und stabilisierenden Stegen, gegebenenfalls zusätzlich aus einem flächigen Abschnitt bestehen, der dekoriert werden kann, etwa mit einem Logo. Dieser Abschnitt kann zentral in dem Tragegriff angeordnet sein.

Weiter kann, damit der Tragegriff nicht unerwünscht vor der ersten Benutzung hervorsteht, vorgesehen sein, dass er in seiner Nichtgebrauchsanordnung vor einem ersten Gebrauch mittels zumindest eines Sollbruch-Anspritzpunkts, der an einem außenumfänglichen Rand des Tragegriffs angebracht ist, an der Innenseite des Einleger-Rings befestigt ist. Ein oder zwei kleine Materialpunkte genügen hier zwischen dem Einleger-Ring und dem liegend angeordneten Griffrand, um diesen in der liegenden Position zu halten. Diese Punkte sind bei Ingebrauchnahme schnell gelöst.

Der ringförmige Bördelrand an der Oberseite des Fässchens hat in der erfindungsgemäßen Kombination einen Durchmesser, der kleiner ist, als ein Durchmesser an einer Fässchen-Unterseite, der wiederum eine Größe aufweist, die größer ist als ein Durchmesser, den ein um die Klammern der Tragevorrichtung gedachter Ring hat. So können derartige Fässchen auch gut und sicher gestapelt werden.

Ob im Übrigen Spielfreiheit oder wenig Spiel zwischen dem Einleger-Ring und dem Bördelrand vorliegt, kann sich dadurch ergeben, dass die an dem Einleger-Ring vorgesehenen Klammern sich außenseitig an dem Einleger-Ring befinden und sich daher durch ihre Befestigungsfläche ein Distanzstück ergibt, das zwischen Bördelrand und Einleger-Ring zu liegen kommt und das Spiel bestimmt.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Es zeigt:
- **Fig. 1**: eine perspektivische Ansicht einer erfindungsgemäßen Kombination aus Fässchen mit Tragevorrichtung in Nichtbenutzungsanordnung,
- **Fig. 2**: eine perspektivische Ansicht einer erfindungsgemäßen Kombination aus Fässchen mit Tragevorrichtung in Benutzungsanordnung,
- **Fig. 3a**: eine Untenansicht der Tragevorrichtung,
- **Fig. 3b**: eine Seitenansicht der Tragevorrichtung,
- **Fig. 3c**: eine Ansicht von oben auf die Tragevorrichtung,
- **Fig. 3d**: eine perspektivische Draufsicht auf die Tragevorrichtung,
- **Fig. 3e**: eine perspektivische Untenansicht der Tragevorrichtung.

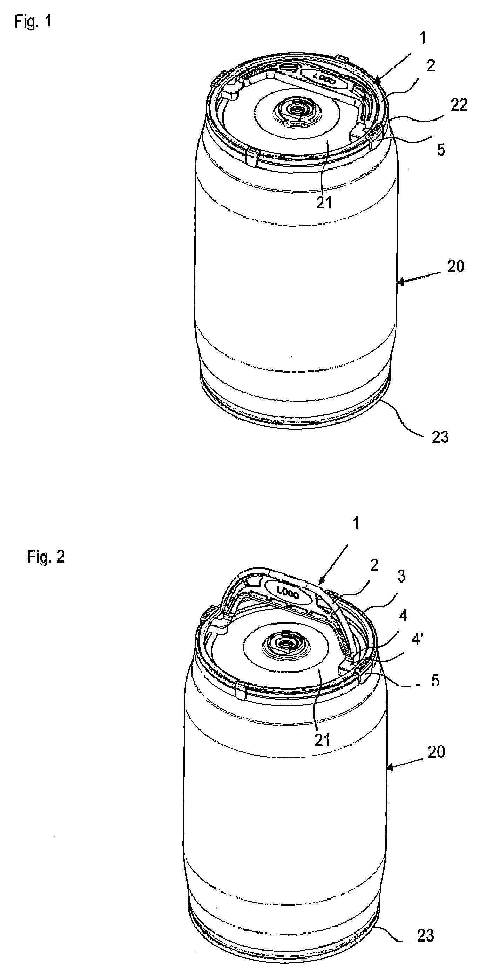

Durch eine erfindungsgemäße Kombination aus Fässchen 20 und Tragevorrichtung 1, siehe **Fig. 1 bis 3e****,** können Fässchen wie insbesondere Partyfässchen 20 für Bier, aber natürlich auch Fässchen für andere Getränke, sicher und bequem getragen werden. **Fig. 1** zeigt ein Fässchen mit einem Fassungsvermögen von 5 Litern mit der Tragevorrichtung 1 in Nichtbenutzungsanordnung, d. h. in einer Anordnung, in der der Tragegriff 2 der Vorrichtung in liegender Position in Bezug zu einer Oberseite 21 des Fässchens 20 steht. In einer Benutzungsanordnung ist die Tragevorrichtung 1 in **Fig. 2** gezeigt, in der der Tragegriff 2 hochgeschwenkt ist und bequem mit einer Hand gegriffen werden kann.

Wie zu sehen ist, hat das Fässchen 20 an seiner Oberseite 21 einen ringförmigen Bördelrand 22, dessen Durchmesser kleiner ist als ein Durchmesser einer Fässchen Unterseite 23. So können derartige Fässchen 20 samt Tragevorrichtung 1 bequem und sicher gestapelt werden, da die Tragevorrichtung 1 des einen Fässchens nahezu vollständig innerhalb des Bördelrandes 23 des darüber gestapelten Fässchens 20 verschwindet. So sind zwei übereinander gestapelte Fässchen 20 mit Tragevorrichtung 1 nur um wenige Millimeter höher als ohne Tragevorrichtung 1 und können daher bereits so verkaufsbereit gelagert werden, oder auch vom Endabnehmer so bevorratet werden.

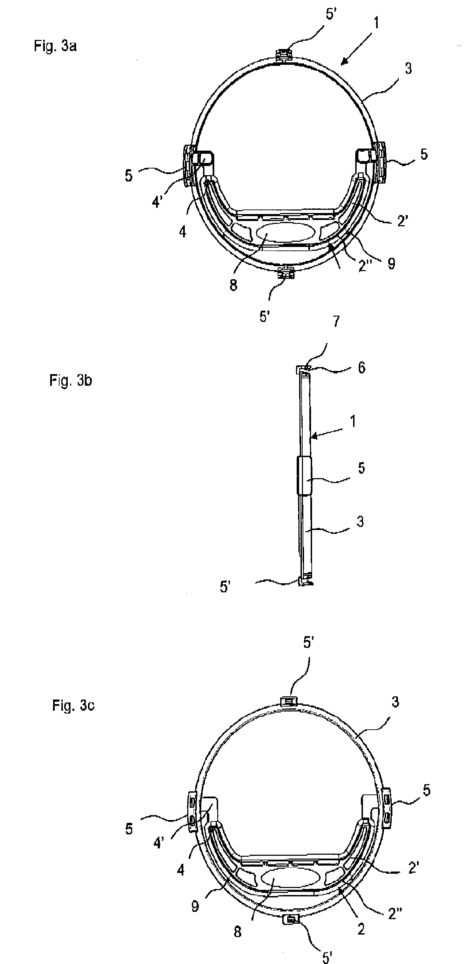

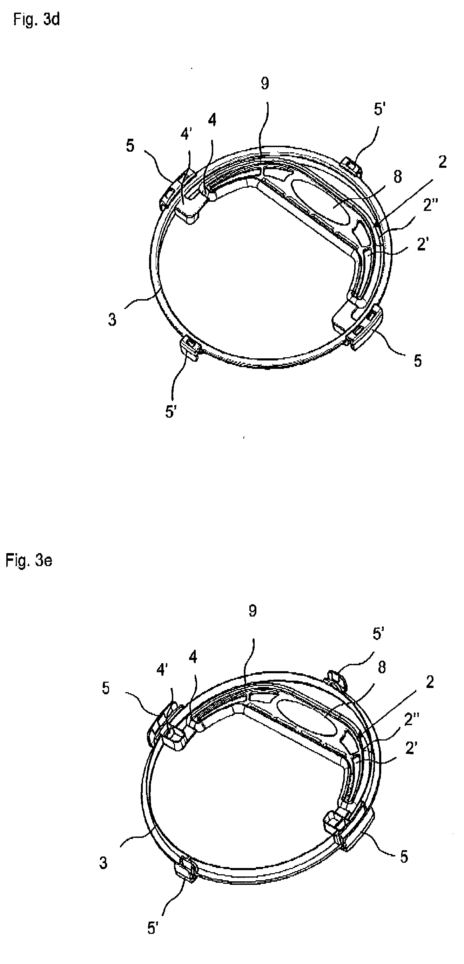

Diese raum- und materialsparende Tragevorrichtung 1, die das Tragen derartiger Fässchen ermöglicht, wird durch einen Einleger-Ring 3 gestaltet, siehe **Fig. 3a bis 3e****,** dessen Durchmesser kleiner ist als der Ring, der durch den Bördelrand 22 des Fässchens an dessen Oberseite 21 gebildet wird.

So kann der Einleger-Ring 3 innerhalb des Bördelrandes 22 eingelegt werden, und seine als Befestigungsmittel zur Verbindung mit dem Fässchen 20 vorgesehenen Klammern 5,5' die an dem Außenumfang des Einleger-Rings 3 angeordnet sind, umgreifen haltend den Bördelrand 22. Dazu haben die Klammern 5,5' eine Klammeröffnung 6, die sich nach unten erstreckt und in der hier als innenseitiges Eingriffsmittel Rastnasen 7 angeordnet sind. Diese Rastnasen 7 untergreifen den Bördelrand und halten bei Zug nach oben (durch Tragen) den Einleger-Ring 3 der Tragevorrichtung 1 sicher in Position.

Vorliegend sind zwei Klammern 5 der insgesamt vier Klammern 5,5', nämlich die an dem Einleger-Ring 3 an der Position vorliegen, die der Position der Befestigungsabschnitte 4' für den Tragegriff 2 entspricht, breiter, respektive länger ausgeführt; sie bieten Platz für mehrere Rastnasen 7 und sorgen dafür, dass an Stellen auftretender Zugkräfte ein entsprechend sicherer Eingriff der Klammern 5 am Rand des Fässchens 20 gegeben ist.

Die gelenkige Befestigung des Tragegriffs 2, die das Schwenken und Ablegen desselben erlaubt, wird durch zwei Befestigungsabschnitte 4' realisiert, die an den gegenüberliegenden Seiten des Einleger-Rings 3 innenumfänglich vorliegen. An diesen Befestigungsabschnitten 4', die L-förmig ausgeführt sind, wobei der distale Schenkel wie der Rand des Einleger-Rings 3 verläuft, liegt in Verlängerung je ein Scharnier 4, hier ein Filmscharnier 4 vor, das jeweils mit einem Ende des Tragegriffs 2 verbunden ist. Durch die Anordnung der Scharniere 4 wird eine Schwenkbarkeit des Tragegriffs 2 in Bezug zu einer in der Ebene des Einleger-Rings 3 liegenden Schwenkachse bereitgestellt. In einer Nichtgebrauchsanordnung kommt daher, wie **Fig. 1** verdeutlicht, der Tragegriff 2 vollständig in der Ebene des Einleger-Rings 3 zu liegen, er ragt also nicht empor, sondern spannt eine Ebene auf, deren Oberfläche mit der Oberfläche der durch den Bördelrand 22 aufgespannten Ebene fluchtet. Damit wird die Tragevorrichtung besonders komfortabel raumsparend.

Die Tragevorrichtung 1 kann teilweise oder vollständig aus Kunststoff beschaffen sein, insbesondere aus einem thermoplastischen Kunststoff wie Polyethylen, Polypropylen, Polyester, Polyethylentherphthalat, Polystyrol, HD-Polyethylen. Derartige spritzgiessbare Materialien lassen zum Einen das Ausbilden eines Filmscharniers zu, sind günstig, haltbar und erlauben auch die einstückige Herstellung des Gegenstandes.

Der Tragegriff 2 ist im gezeigten Ausführungsbeispiel nicht massiv ausgeführt, sondern er besteht aus dem Rahmen 2" und Stegen 2', die sich vom Rahmen 2" zu einem mittleren Längsstück erstrecken, das in einen mittig positionierten flächigen Abschnitt 8 mündet, der hier mit dem Schriftzug "Logo" dekoriert ist und natürlich zur Aufbringung von Werbung und Ähnlichem verschiedener Art geeignet ist.

Damit der Tragegriff 2 in seiner Nichtgebrauchsanordnung vor einem ersten Gebrauch nicht schon unerwünscht nach oben steht und beim Stapeln stört, ist er vorliegend mittels zumindest zweier Sollbruch-Anspritzpunkte 9, die an der Rahmenaußenseite vorliegen, an der Innenseite des Einleger-Rings 3 befestigt; gut zu sehen etwa in **Fig. 3c****.** Der Tragegriff 2 lässt sich ohne Kraftaufwand leicht lösen; die Anspritzpunkte 9 werden dabei zerstört, und die Vorrichtung kann in den Gebrauchszustand überführt werden.

## Patentansprüche

1. Kombination aus einem Fässchen (20), das an seiner Oberseite (21) einen ringförmigen Bördelrand (22) aufweist, dessen äußerer Durchmesser kleiner ist als ein innerer Durchmesser eines Bördelrands (23) an der Fässchen-Unterseite, und einer Tragevorrichtung (1), die an der Oberseite (21) des Fässchens (20) befestigbar oder befestigt ist, wobei die Tragevorrichtung (1) eine ringförmige Basis aufweist, an der an einander gegenüberliegenden Seiten der ringförmigen Basis ein Tragegriff (2) gelenkig befestigt ist, wobei die gelenkige Befestigung des Tragegriffs (2) über zwei Befestigungsabschnitte (4') bereitgestellt wird, die an den gegenüberliegenden Seiten der ringförmigen Basis innenumfänglich vorliegen und die jeweils ein Scharnier (4) aufweisen, das mit je einem Ende des Tragegriffs (2) verbunden ist, wobei die Scharniere (4) so angeordnet sind, dass eine Schwenkbarkeit des Tragegriffs (2) in Bezug zu einer in der Ebene der ringförmigen Basis liegenden Schwenkachse bereitgestellt wird, derart, dass in einer Nichtgebrauchsanordnung der Tragegriff (2) vollständig in der Ebene der ringförmigen Basis aufgenommen ist,
und wobei an der ringförmigen Basis zumindest drei Befestigungsmittel zum Befestigen der Tragevorrichtung (1) an der Oberseite (21) des Fässchens (20) vorliegen und die ringförmige Basis als ein Einleger-Ring (3) mit einem Umfang zum Einlegen des Einleger-Rings (3) in den Bördelrand (22) an der Oberseite (21) des Fässchens (20) ausgebildet ist,
und die Befestigungsmittel Klammern (5,5') sind, die an einem Außenumfang des Einleger-Rings (3) angeordnet sind und die jeweils eine Klammeröffnung (6) aufweisen, die sich zu einer von der Griffseite der Tragevorrichtung (1) weg weisenden Seite öffnet und gleitend von oben über den Bördelrand aufschiebbar ist und die innenseitig Eingriffsmittel aufweisen, die geeignet sind, mit dem Bördelrand (22) in haltenden Eingriff gebracht zu werden, **dadurch gekennzeichnet, dass** ein Durchmesser, den ein um die Klammern (5,5') der Tragevorrichtung (1) gedachter Ring hat, kleiner als der innere Durchmesser des Bördelrands (23) an der Unterseite des Fässchens (20) ist.

2. Kombination nach Anspruch 1,
**dadurch gekennzeichnet, dass**
als innenseitig vorliegende Eingriffsmittel an jeder Klammer (5,5') zumindest eine Rastnase (6) vorgesehen ist.

3. Kombination nach Anspruch 1 oder 2,**dadurch gekennzeichnet, dass** zumindest zwei Klammern (5) der insgesamt zumindest drei, bevorzugt zumindest vier oder mehr Klammern (5,5'), an dem Einleger-Ring (3) an der Position vorliegen, die der Position der Befestigungsabschnitte (4') entspricht.

4. Kombination nach Anspruch 3, **dadurch gekennzeichnet, dass** diese zumindest zwei Klammern (5) eine größere Breite aufweisen als die weiteren Klammern (5').

5. Kombination nach zumindest einem der Ansprüche 1 bis 4,
**dadurch gekennzeichnet, dass**
eine Gesamthöhe der Tragevorrichtung (1) in ihrer Nichtgebrauchsanordnung und der Umfang, den der um die Klammern (5,5') der Tragevorrichtung (1) gedachte Ring hat, in Bezug auf den Bördelrand (23) an der Unterseite des Fässchens (20) abgestimmt dimensioniert ist, in einer Weise, dass die an der Oberseite (21) des Fässchens (20) befestigte Tragevorrichtung (1) zumindest bis zur halben Höhe der Tragevorrichtung (1) und mit ihrem Umfang innerhalb eines Umfangs des Bördelrandes (23) an der Unterseite eines weiteren gleichartigen Fässchens (20) aufnehmbar ist, das auf dem Fässchen (20) angeordnet ist, an dem die Tragevorrichtung (1) in der Nichtgebrauchsanordnung befestigt ist.

6. Kombination nach zumindest einem der Ansprüche 1 bis 5,
**dadurch gekennzeichnet, dass**
- das Scharnier (4) ein Filmscharnier (4) ist, und/oder
- dass die Tragevorrichtung (1) teilweise oder vollständig aus Kunststoff, insbesondere aus einem thermoplastischen Kunststoff, bevorzugt aus einem thermoplastischen Kunststoff aus der Gruppe umfassend Polyethylen, Polypropylen, Polyester, Polyethylentherphthalat, Polystyrol, HD-Polyethylen, gefertigt ist, insbesondere spritzgegossen ist, und/oder
- dass die Tragevorrichtung (1) einstückig gefertigt ist.

7. Kombination nach zumindest einem der Ansprüche 1 bis 6,
**dadurch gekennzeichnet, dass**
- der Tragegriff (2) nicht massiv ausgeführt ist, sondern aus einem Rahmen (2") und Stegen (2') oder aus einem Rahmen (2"), Stegen (2') und einem dekorierbaren, flächigen Abschnitt (8) besteht.

8. Kombination nach zumindest einem der Ansprüche 1 bis 7,
**dadurch gekennzeichnet, dass** der Tragegriff (2) in seiner Nichtgebrauchsanordnung vor einem ersten Gebrauch mittels zumindest eines Sollbruch-Anspritzpunkts (9), der an einem außenumfänglichen Rand des Tragegriffs (2) angebracht ist, an der Innenseite des Einleger-Rings (3) befestigt ist.

## Claims

1. A combination of a small keg (20), which on the top side (21) has an annular flanged rim (22), the outer diameter of which is smaller than an inner diameter of a flanged rim (23) on the bottom side of the small keg, and a carrying device (1), which can be fastened or is fastened to the top side (21) of the small keg (20), the carrying device (1) comprising an annular base, to which a carrying handle (2) is fastened in an hinged manner on mutually opposing sides of the annular base, the hinged fastening of the carrying handle (2) being provided by two fastening sections (4'), which are present across the entire inner circumference of the opposing sides of the annular base and each comprise a hinge (4) that is connected to respective end of the carrying handle (2), the hinges (4) being disposed such that a pivotability of the carrying handle (2) with respect to a pivot axis located in the plane of the annular base is provided, such that, in a non-usage arrangement, the carrying handle (2) is completely accommodated in the plane of the annular base, and at least three fastening means being present at the annular base for fastening the carrying device (1) to the top side (21) of the small keg (20), and the annular base being designed as an insertion ring (3) having a circumference for inserting the insertion ring (3) into the flanged rim (22) on the top side (21) of the small keg (20),
and the fastening means being clamps (5,5'), which are disposed on an outer circumference of the insertion ring (3) and each have a clamp opening (6), which opens toward a side pointing away from the grip side of the carrying device (1) and can be slideably pushed from above over the flanged rim, and which comprise engagement means on the inside, suitable for being brought in retaining engagement with the flanged rim (22),
**characterised in that**
a diameter of an imaginary ring around the clamps (5, 5') of the carrying device (1) is smaller than the inner diameter of the flanged rim (23) on the bottom side of the small keg (20).

2. The combination according to claim 1,
**characterised in that**
at least one catch lug (6) is provided on each clamp (5,5') as the engagement means present on the inside.

3. The combination according to claim 1 or 2, **characterised in that** at least two clamps (5) of the total of at least three, preferably at least four or more, clamps (5,5') at the insertion ring (3) are present at the position that corresponds to the position of the fastening sections (4').

4. The combination according to claim 3,
**characterised in that**
these at least two clamps (5) have a larger width than the further clamps (5').

5. The combination according to any one of claims 1 to 4,
**characterised in that**
a total height of the carrying device (1), in the non-usage arrangement of the same, and the circumference that the imaginary ring around the clamps (5, 5') of the carrying device (1) has are matched with respect to the flanged rim (23) on the bottom side of the small keg (20) in terms of their dimensions in a way so that the carrying device (1) fastened to the top side (21) of the small keg (20) can be accommodated at least up to half the height of the carrying device (1) and, in terms of the circumference thereof, inside a circumference of the flanged rim (23) on the bottom side of a further identical small keg (20), which is disposed on the small keg (20) to which the carrying device (1) is fastened in the non-usage arrangement.

6. The combination according to any one of claims 1 to 5,
**characterised in that**
- the hinge (4) is an integral hinge (4), and/or
- the carrying device (1) is partially or completely produced, in particular injection-moulded, from a plastic material, in particular from a thermoplastic material, preferably a thermoplastic material from the group consisting of polyethylene, polypropylene, polyester, polyethylene terephthalate, polystyrene, and HD polyethylene, and/or
- the carrying device (1) is produced in one piece.

7. The combination according to any one of claims 1 to 6,
**characterised in that**
- the carrying handle (2) is not solid, but composed of a frame (2") and webs (2'), or a frame (2"), webs (2') and a planar section (8) that can be decorated.

8. The combination according to any one of claims 1 to 7,
**characterised in that**
the carrying handle (2), in the non-usage arrangement thereof, prior to a first use (2) is fastened to the inside of the insertion ring (3) by way of at least one predetermined breaking gating point (9), which is provided on a rim of the carrying handle (2) located on the outer circumference.

## Revendications

1. Combinaison d'un baril (20) qui présente sur sa face supérieure (21), un rebord (22) annulaire dont le diamètre extérieur est inférieur à un diamètre intérieur d'un rebord (23) sur la sous-face du baril, et un dispositif de transport (1) qui peut être fixé ou est fixé sur la face supérieure (21) du baril (20), dans lequel le dispositif de transport (1) présente une base annulaire, sur laquelle une poignée de transport (2) est fixée en articulation sur des côtés opposés entre eux de la base annulaire, dans lequel la fixation en articulation de la poignée (2) est fournie par le biais de deux tronçons de fixation (4') qui sont présents sur le pourtour intérieur sur les côtés opposés de la base annulaire et qui présentent respectivement une charnière (4) qui est reliée à une extrémité de la poignée (2), dans lequel les charnières (4) sont ainsi disposées qu'une capacité de pivotement de la poignée de transport (2) par rapport à un axe de pivotement reposant dans le plan de la base annulaire est fourni, de telle sorte que dans un agencement de non-utilisation, la poignée de transport (2) est reçue complètement dans le plan de la base annulaire,
et dans lequel au moins trois moyens de fixation pour fixer le dispositif de transport (1) sur la face supérieure (21) du baril (20) sont présents sur la base annulaire et la base annulaire est formée en tant que bague d'insertion (3) avec un pourtour pour insérer la bague d'insertion (3) dans le rebord (22) sur la face supérieure (21) du baril (20),
et les moyens de fixation sont des fixations (5;5') qui sont disposées sur un pourtour extérieur de la bague d'insertion (3) et qui présentent respectivement une ouverture de fixation (6), qui s'ouvre vers un côté s'éloignant du côté de poignée du dispositif de transport (1) et est mobile sur le rebord en coulissant par le haut et qui présente des moyens de mise en prise côté intérieur qui sont appropriés pour être en prise de retenue avec le rebord (22),
**caractérisée en ce**
**qu'**un diamètre d'une bague imaginaire autour des fixations (5, 5') du dispositif de transport (1) est inférieur au diamètre intérieur du rebord (23) sur la face inférieure du baril (20).

2. Combinaison selon la revendication 1,
**caractérisée en ce qu'**au moins un ergot d'encliquetage (6) est prévu en tant que moyen de mise en prise côté intérieur sur chaque fixation (5, 5').

3. Combinaison selon la revendication 1 ou 2,
**caractérisée en ce qu'**au moins deux fixations (5) des au moins trois, de préférence au moins quatre ou plus fixations (5,5') en tout sur la bague d'insertion sont dans la position (3) qui correspond à la position des tronçons de fixation (4').

4. Combinaison selon la revendication 3,
**caractérisée en ce que** ces au moins deux fixations (5) présentent une plus grande largeur que les autres fixations (5').

5. Combinaison selon au moins l'une des revendications 1 à 4,
**caractérisée en ce**
**qu'**une hauteur totale du dispositif de transport (1) dans son agencement de non-utilisation et le pourtour de la bague imaginaire autour des fixations (5, 5') du dispositif de transport (1), sont dimensionnés de façon adaptée par rapport au rebord (23) sur la face inférieure du baril (20) d'une manière que le dispositif de transport (1) fixé sur la face supérieure (21) du baril (20) puisse être reçu au moins jusqu'à la mi-hauteur du dispositif de transport (1) et puisse être reçu par son pourtour à l'intérieur d'un pourtour du rebord (23) sur la face inférieure d'un autre baril (20) similaire, qui est disposé sur le baril (20) sur lequel le dispositif de transport (1) est fixé dans son agencement de non-utilisation.

6. Combinaison selon au moins l'une des revendications 1 à 5,
**caractérisée en ce que**
- la charnière (4) est une charnière à film (4) et/ou
- que le dispositif de transport (1) est fabriqué intégralement ou partiellement en plastique, en particulier en plastique thermoplastique, de préférence dans un plastique thermoplastique du groupe comprenant le polyéthylène, le polypropylène, le polyester, le polyéthylènethéréphtalate, le polystyrène, le polyéthylène HD, en particulier moulé par injection et/ou
- que le dispositif de transport (1) est fabriqué d'une seule pièce.

7. Combinaison selon au moins l'une des revendications 1 à 6,
**caractérisée en ce que**
- la poignée de transport (2) n'est pas construite de façon massive mais est composée d'un cadre (2") et de barres (2') ou d'un cadre (2"), de barres (2') et d'un tronçon (8) surfacique pouvant être décoré.

8. Combinaison selon au moins l'une des revendications 1 à 7, **caractérisée en ce que**
la poignée de transport (2), dans son agencement de non-utilisation, avant une première utilisation, est fixée sur la face intérieure de la bague d'insertion (3) au moyen d'au moins un point d'injection à rupture nominale (9) qui est placé sur un bord du pourtour extérieur de la poignée de transport (2).
